# EUROPEAN PATENT SPECIFICATION

(11) **EP 2 815 599 B1**
(45) Date of publication and mention of the grant of the patent: **30.12.2020**
(21) Application number: 13748492.9
(22) Date of filing: 15.02.2013
(51) Int. Cl.: H04W 16/00, H04W 24/02, H04W 92/20

(54) **COMMUNICATION SYSTEM, IDENTIFIER ASSIGNMENT DEVICE, BASE STATION, IDENTIFIER ASSIGNMENT METHOD, AND NON-TRANSITORY COMPUTER READABLE MEDIUM EMBODYING INSTRUCTIONS FOR CONTROLLING A DEVICE**
KOMMUNIKATIONSSYSTEM, IDENTIFIKATORZUWEISUNGSVORRICHTUNG, BASISSTATION, IDENTIFIKATORZUWEISUNGSVERFAHREN UND NICHTTRANSITORISCHES COMPUTERLESBARES MEDIUM MIT BEFEHLEN ZUR STEUERUNG EINER VORRICHTUNG
SYSTÈME DE COMMUNICATION, DISPOSITIF D'ATTRIBUTION D'IDENTIFIANT, STATION DE BASE, PROCÉDÉ D'ATTRIBUTION D'IDENTIFIANT ET SUPPORT NON TRANSITOIRE LISIBLE PAR UN ORDINATEUR CONTENANT DES INSTRUCTIONS DE COMMANDE D'UN DISPOSITIF

(30) Priority: 17.02.2012 JP 2012033095
(43) Date of publication of application: 24.12.2014
(73) Proprietor: NEC Corporation, Tokyo 108-8001 (JP)
(72) Inventor: HOSOBE, Hideumi, Tokyo 108-8001 (JP)
(74) Representative: MacDougall, Alan John Shaw
(86) International application number: PCT/JP2013/000857
(87) International publication number: WO 2013/121798

(56) References cited:
- EP-A1- 2 271 142
- EP-A2- 2 405 682
- WO-A1-2009/022974
- WO-A1-2009/143769
- JP-A- 2012 019 468
- JP-A- 2013 021 450
- US-A1- 2010 105 395
- US-A1- 2011 086 652
- NOKIA SIEMENS NETWORKS ET AL: "SON Use Case: Cell Phy_ID Automated Configuration", 3GPP DRAFT; R3-080376 (PHYID AUTOCONF), 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Sorrento, Italy; 20080205, 5 February 2008 (2008-02-05), XP050163582, [retrieved on 2008-02-05]
- NOKIA SIEMENS NETWORKS ET AL.: 'SON Use Case: Cell Phy ID Automated Configuration' 3GPP TSG- RAN WG3 MEETING #59, R3-080376 February 2008, pages 1 - 4, XP050163582

## Description

### Technical Field

The exemplary embodiments relates to a communication system, a device and methods for assigning an identifier to a cell.

### Background Art

The speed and capacity of communication between servers and backplane boards are increasing today. Accordingly, there is a possibility that the radio environment changes after assigning a PCI (Physical Cell Identifier), which is one type of a cell identifier. Therefore, in PCI assignment, it is necessary to select a PCI that can maintain collision-free and confusion-free even when the radio environment changes.

However, enormous work is required to measure the actual radio environment. Further, detailed information elements such as obstacles are required to estimate the radio environment, and it is difficult to manage such enormous information. Therefore, there is a demand for a communication system in which a PCI that is likely to maintain collision-free and confusion-free can be assigned.

Techniques related to PCT assignment are described in Japanese Unexamined Patent Application Publication No. 2011-004377, Japanese Unexamined Patent Application Publication (Translation of PCT Application) No. 2010-537479, and Japanese Unexamined Patent Application Publication No. 2010-268463.

According to the handover method disclosed in Japanese Unexamined Patent Application Publication No. 2011-004377, a reconnection procedure is executed in the event PCI confusion occurs.

Further, according to the conflict resolution method disclosed in Japanese Unexamined Patent Application Publication (Translation of PCT Application) No. 2010-537479, when a detection node detects that a first cell identifier related to a first conflict cell is the same as a second cell identifier related to a second conflict cell, one of the first and second conflict cells is selected. Then, a different cell identifier is determined for the selected cell.

However, both of the above techniques detect the overlap of an identifier such as a PCI between adjacent cells and then resolve the detected overlap of an identifier. Therefore, it is unable in PCI assignment to select a PCI that can maintain collision-free and confusion-free even when radio environment changes.

A technique related to selection of a PCI in consideration of maintaining collision-free and confusion-free is disclosed in Japanese Unexamined Patent Application Publication No. 2010-268463, for example.

According to the PCI assignment method disclosed in Japanese Unexamined Patent Application Publication No. 2010-268463, a SON (Self-Organizing Network) functional node pieces together information of an adjacent cells reported from each base station under the control thereof. Then, the SON functional node then assigns a PCI to a cell based on the adjacent cell information.

However, in this technique, only identifier information of adjacent cells of a cell formed by a base station connected to the SON functional node is transmitted to the SON functional node. This causes a problem that, when assigning an identifier such as a PCI, the SON functional node can consider the identifier information of adjacent cells of the cell formed by the base station connected to itself but cannot consider the identifier information of cells adjacent to those adjacent cells. As a result, a serious problem occurs that it is difficult to maintain collision-free and confusion-free in the event radio environment changes.

This problem is caused by the fact that there is no way for the SON functional node to know the identifier information of adjacent cells of a cell formed by a base station that is not connected to the SON functional node.

3GPP Draft no. R3-080376 (Nokia Siemens Networks et al: "SON Use case: Cell Phy-ID Automated Configuration") discloses a use case that an automated configuration of a newly introduced cell's physical ID (L1 cell identifier). The mechanism relies on collecting information by means of ANR from UEs in the network and thus presents a critical dependence on the timely discovery of the neighbours.

US 2011/086652 A1 discloses a method and apparatus that allocates a Physical Cell Identifier (PCID) in a wireless communication system by considering a PCID reuse factor. An allowable PCID list is acquired from a server. A set of candidate PCIDs is determined from the allowable PCID list according to PCID allocation conditions. A received signal strength of each cell using the determined set of candidate PCID is determined. At least one PCID is selected by using a PCID reuse factor and the received signal strength of each of the cells using the determined set of candidate PCIDs.

EP 2 405 682 A2 discloses a cell identifier deciding method that includes: judging whether identification of cell identifiers allocated to cells covered by a plurality of radio base stations is allowed among the plurality of radio base stations; and changing the cell identifier of a radio base station which is relatively low in processing load imposed on changing of its cell identifier in the plurality of radio base stations, in a case that it is judged that identification of the cell identifiers is not allowed.

EP 2 271 142 A1 discloses a method of operating a base station of a wireless communication network. The method comprises: comparing a number of missing context release messages with a first criterion; comparing the error rate of connection reestablishment messages with a second criterion; executing a cell global identity search algorithm if at least one of the first and the second criterion is fulfilled, wherein the cell global identity of at least one cell with the physical cell identity of the cell where the criterion was fulfilled is requested via an automatic neighbour relation measurement, and wherein a conflict of physical cell identities is detected and reported to an information algorithm when for the physical cell identity at least two cell global identities are found; informing a central network element and/or at least one base station of the mobile communication network about a conflict of physical cell identities when a conflict of physical cell identities is reported to the information algorithm; and initiating a reassignment of at least one physical cell identity.

WO2009/143769 A1 discloses a method for sending a neighboring cell list. The method includes: an adjacency relation between a first cell of a first access control entity and a second cell of a second control entity, a retransmitting entity retransmits content of a first message sent by the first access control entity to the second control entity, the content of the first message includes the neighboring cell list of the first cell; wherein, the retransmitting entity retransmitting the content of the first message sent by the first access control entity to the second access control entity includes that the retransmitting entity retransmits the content of the first message to the second access control entity based on the indication information of the first message.

### Citation List

### Patent Literature

PL 1:Japanese Unexamined Patent Application Publication No.2011-004377
PL 2:Japanese Unexamined Patent Application Publication (Translation of PCT Application) No. 2010-537479
PL 3:Japanese Unexamined Patent Application Publication No.2010-268463

### Summary of Invention

In view of the above problem, the invention provides a communication system in which an identifier assignment device can know identifier information of adjacent cells of a cell formed by a base station that is not connected to the identifier assignment device.

However, exemplary embodiments are not required to achieve here, objectives described above, and an exemplary embodiment may not achieve any of the objectives described above. In the following, any examples and embodiments not falling within the scope of the claims do not form part of the invention and are provided for illustrative purposes only.

The invention provides a communication system, an identifier assignment device, a base station, and associated methods disclosed in the appended independent claims. Optional, but advantageous features are disclosed in the appended dependent claims.

Also disclosed is a communication system that includes a first base station that forms a first cell, a second base station that forms a second cell, and an identifier assignment device that assigns an identifier for identifying the second cell, wherein the first base station transmits first adjacent cell information containing identifier information of adjacent cells of the first cell to the second base station, and the second base station transmits the first adjacent cell information received from the first base station to the identifier assignment device.

Also disclosed is an identifier assignment device in a communication system including a first base station forming a first cell and a second base station forming a second cell, the identifier assignment device assigning an identifier of the second cell. The identifier assignment device includes a receiving unit that receives first adjacent cell information containing identifier information of adjacent cells of the first cell from the second base station, and an identifier assignment unit that assigns an identifier of the second cell based on the first adjacent cell information received by the receiving unit.

Also disclosed is a base station in a communication system including a first cell, a second cell, and an identifier assignment device that assigns an identifier of the second cell, the base station forming the second cell. The base station includes a receiving unit that receives first adjacent cell information containing identifier information of adjacent cells of the first cell from another base station forming the first cell, and a transmitting unit that transmits the first adjacent cell information to the identifier assignment device.

Also disclosed is an identifier assignment method that includes a step of transmitting first adjacent cell information containing identifier information of adjacent cells of a first cell formed by a first base station to a second base station that forms a second cell, and a step of transmitting the first adjacent cell information received by the second base station to an identifier assignment device that assigns an identifier of the second cell.

Also disclosed is a method for an identifier assignment device in a communication system including a first base station forming a first cell and a second base station forming a second cell, the identifier assignment device assigning an identifier of the second cell. The method includes a receiving step of receiving first adjacent cell information containing identifier information of adjacent cells of the first cell from the second base station, and an identifier assignment step of assigning an identifier of the second cell based on the first adjacent cell information received in the receiving step.

Also disclosed is a method for a base station in a communication system including a first cell, a second cell, and an identifier assignment device that assigns an identifier of the second cell, the base station forming the second cell. The method includes a receiving step of receiving first adjacent cell information containing identifier information of adjacent cells of the first cell from another base station forming the first cell, and a transmitting step of transmitting the first adjacent cell information to the identifier assignment device.

Also disclosed is a non-transitory computer readable medium that stores a program causing a computer to execute a step of transmitting first adjacent cell information containing identifier information of adjacent cells of a first cell formed by a first base station to a second base station that forms a second cell, and a step of transmitting the first adjacent cell information received by the second base station to an identifier assignment device that assigns an identifier of the second cell.

### Advantageous Effects of Invention

According to the present invention, an identifier assignment device can know identifier information of a cell adjacent to a cell formed by a base station that is not connected to the identifier assignment device.

In view of the above problem, an exemplary object of the invention is to provide a communication system in which an identifier assignment device can know identifier information of adjacent cells of a cell formed by a base station that is not connected to the identifier assignment device.

### Brief Description of Drawings

[Fig. 1] Fig. 1 is a block diagram showing a configuration of a communication system according to a first exemplary embodiment of the present invention.
[Fig. 2] Fig. 2 is a block diagram showing a configuration of a second base station according to the first exemplary embodiment of the present invention.
[Fig. 3] Fig. 3 is a block diagram showing a configuration of an identifier assignment device according to the first exemplary embodiment of the present invention.
[Fig. 4] Fig. 4 is a flowchart illustrating an operation of the communication system according to the first exemplary embodiment of the present invention.
[Fig. 5] Fig. 5 is a block diagram showing a configuration of a communication system according to a second exemplary embodiment of the present invention.
[Fig. 6] Fig. 6 is a block diagram showing a configuration of a SON functional unit according to the second exemplary embodiment of the present invention.
[Fig. 7] Fig. 7 is a diagram showing an X2 interface established between eNBs according to the second exemplary embodiment of the present invention.
[Fig. 8] Fig. 8 is a diagram showing a structure of an IE contained in an X2 setup request message.
[Fig. 9] Fig. 9 is a diagram showing a structure of an IE contained in an X2 setup response message.
[Fig. 10] Fig. 10 is a diagram showing a structure of an IE contained in an ENB configuration update message.
[fig.11]Fig. 11 is a diagram showing cell adjacent relation according to the second exemplary embodiment of the present invention.
[fig.12] Fig. 12 is a block diagram showing a configuration of a part of the communication system according to the second exemplary embodiment of the present invention.
[fig.13]Fig. 13 is a diagram showing an example of an operation flow of the communication system according to the second exemplary embodiment of the present invention.

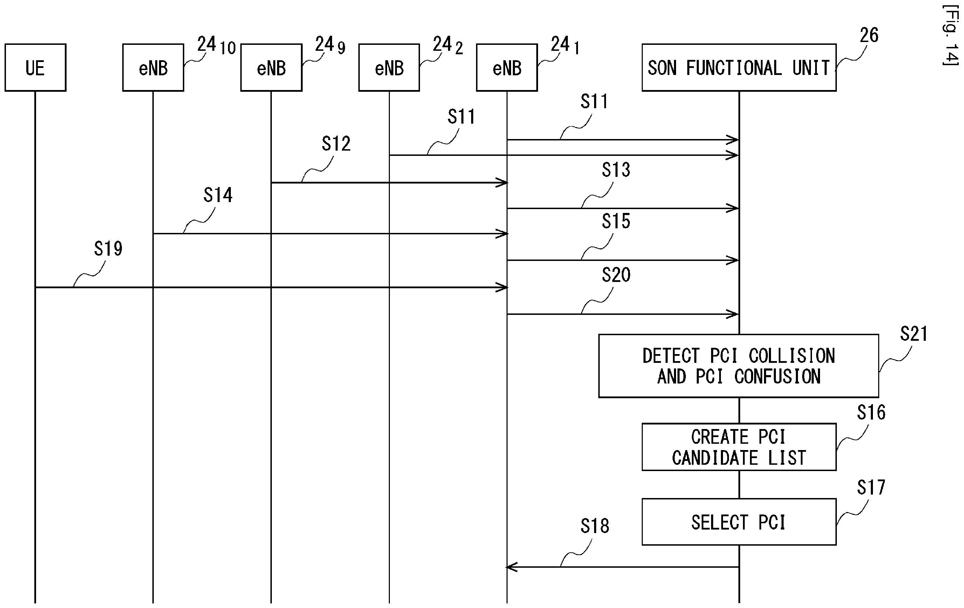

[fig.14] Fig. 14 is a diagram showing another example of an operation flow of the communication system according to the second exemplary embodiment of the present invention.
[fig.15]Fig. 15 is a diagram showing a list of PCIs and EGCIs of cells adjacent to cells adjacent to adjacent cells of a cell to which a PCI is assigned according to a third exemplary embodiment of the present invention.

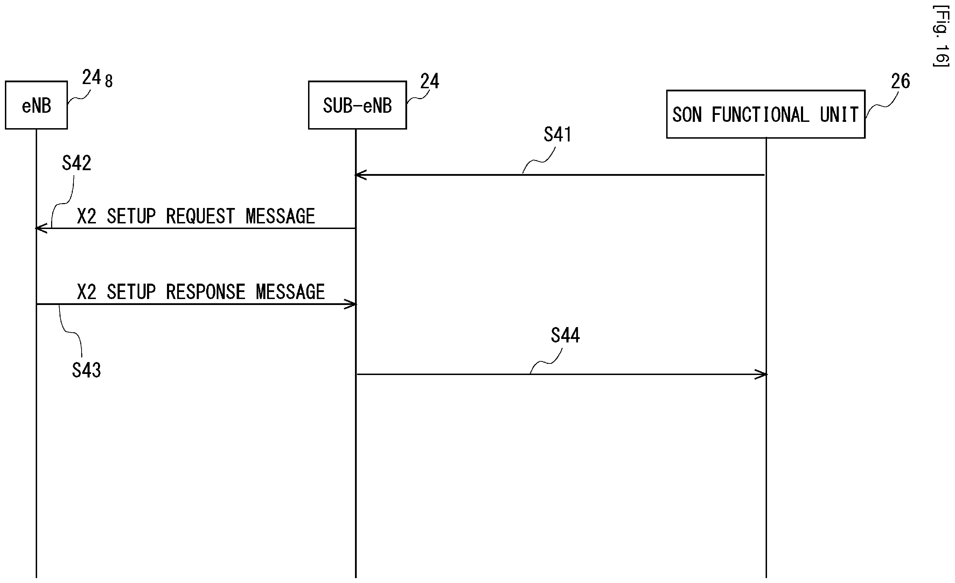

[fig.16] Fig. 16 is a diagram showing an example of an operation flow of the communication system according to the third exemplary embodiment of the present invention.
[fig.17]Fig. 17 is a block diagram showing an example of a configuration of a communication system according to the present invention.
[fig.18]Fig. 18 is a block diagram showing an example of a configuration of a communication system according to the present invention.

### Description of Embodiments

Exemplary embodiments of the present invention are described hereinafter with reference to the drawings. The exemplary embodiments, however, do not limit the scope of the present invention.

### First exemplary embodiment

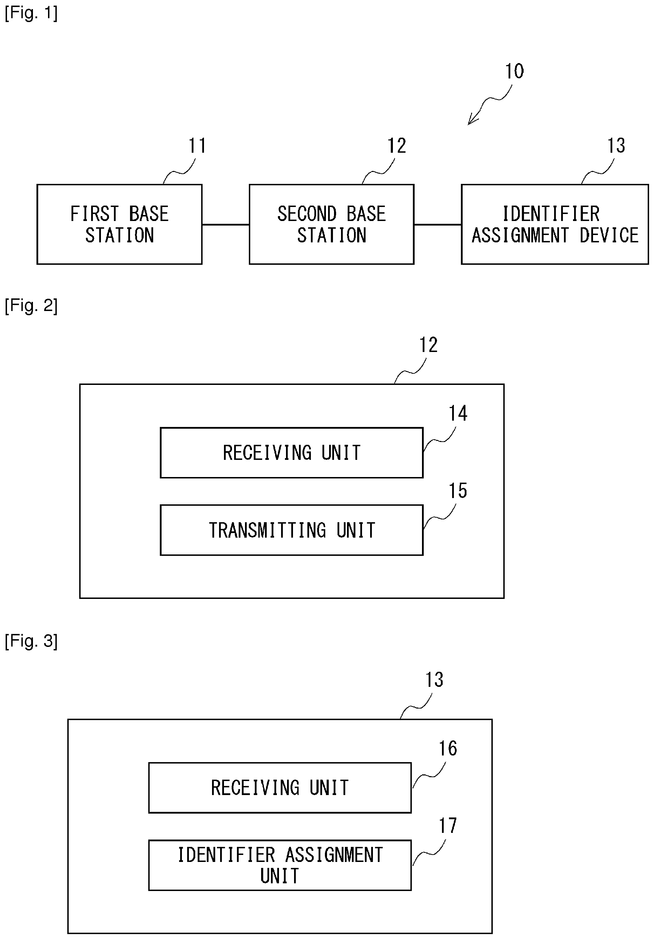

A communication system according to the first exemplary embodiment of the present invention is described hereinafter with reference to Fig. 1.

A communication system 10 according to this exemplary embodiment includes a first base station 11, a second base station 12, and an identifier assignment device 13.

The first base station 11 forms a first cell. The second base station 12 forms a second cell. The identifier assignment device 13 assigns an identifier of the second cell.

The first base station 11 transmits first adjacent (neighbor) cell information containing identifier information of adjacent (neighbor) cells of the first cell to the second base station 12. Further, the second base station 12 transmits the first adjacent cell information received from the first base station 11 to the identifier assignment device 13.

The configuration of each of the second base station 12 and the identifier assignment device 13 is described hereinafter with reference to Figs. 2 and 3.

Fig. 2 shows a configuration of the second base station 12. The second base station 12 includes a receiving unit 14 and a transmitting unit 15. The receiving unit 14 receives the first adjacent cell information transmitted from the first base station 11. The transmitting unit 15 transmits the first adjacent cell information received by the receiving unit 14 to the identifier assignment device 13.

Fig. 3 shows a configuration of the identifier assignment device 13. The identifier assignment device 13 includes a receiving unit 16 and an identifier assignment unit 17. The receiving unit 16 receives the first adjacent cell information transmitted from the second base station 12. The identifier assignment unit 17 assigns an identifier of the second cell based on the first adjacent cell information received by the receiving unit 16.

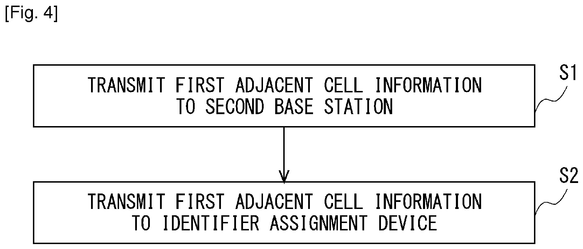

A communication method in the communication system 10 according to this exemplary embodiment is described hereinafter with reference to Fig. 4. First, the first adjacent cell information is transmitted to the second base station 12 (Step S1).

Next, the first adjacent cell information received by the second base station 12 is transmitted to the identifier assignment device 13 (Step S2).

In the above manner, in the communication system 10 according to this exemplary embodiment, the identifier assignment device 13 can know the identifier information of adjacent cells of a cell formed by the first base station 11 even when the identifier assignment device 13 and the first base station 11 are not directly connected.

Therefore, the identifier assignment device 13 according to this exemplary embodiment can assign an identifier that is likely to maintain collision-free and confusion-free even when radio environment changes.

Particularly, in the case where adjacent cells of at least one of the first cell and the second cell include the other cell, the possibility to maintain collision-free and confusion-free increases as a result that the identifier assignment device 13 obtains the first adjacent cell information. However, there is a case where the first cell and the second cell are not adjacent to each other but are close to each other. In such a case also, the possibility to maintain collision-free and confusion-free increases even when radio environment changes can increase in some cases as a result that the identifier assignment device 13 obtains the first adjacent cell information. For example, in the case where adjacent cells of a third cell, which is the adjacent cell of the second cell, include the first cell, the possibility to maintain collision-free and confusion-free can increase as a result that the identifier assignment device 13 uses the first adjacent cell information as in Step S32 of a third exemplary embodiment, which is described later.

### Second exemplary embodiment

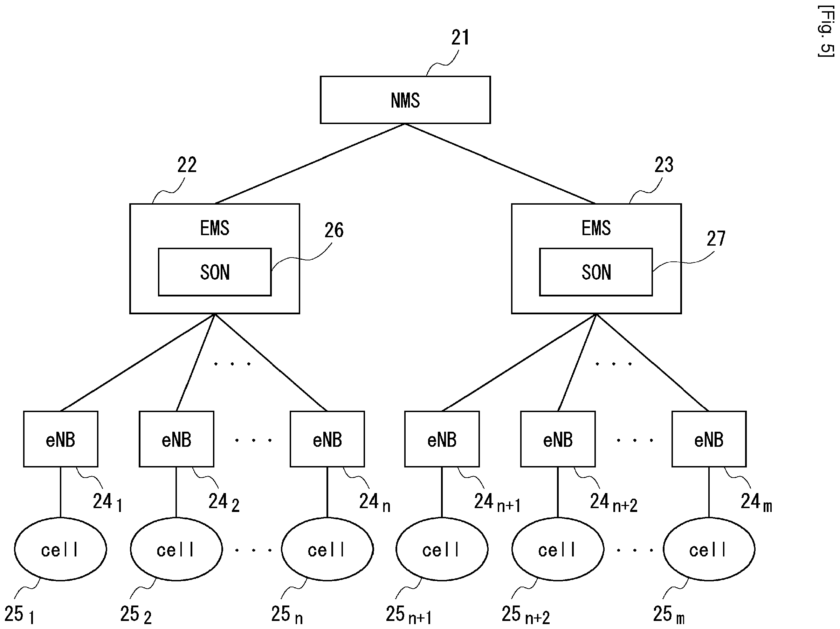

A communication system 20 according to the second exemplary embodiment of the present invention is described hereinafter with reference to Fig. 5.

The communication system 20 according to this exemplary embodiment is an LTE (Long Term Evolution) system having a centralized SON (Self-Organizing Network) function. The "centralized SON" means that a SON functional unit exists in an OAM (Operation Administration and Maintenance) System. The operation performed by the SON functional unit includes self-configuration, self-optimization, self-healing and the like, and, specifically, determination of a PCI, for example. Further, the centralized SON includes NM-centralized SON where NMS (Network Management System) has the SON function and EM-centralized SON where EMS (Element Management System) has the SON function. It is assumed that the communication system 20 according to this exemplary embodiment is the EM-centralized SON. Note that the NMS is a management system that manages the entire LTE network. The EMS is a management system that manages a plurality of base stations (eNB etc.).

The communication system 20 according to this exemplary embodiment includes an NMS 21, EMSs 22 and 23, eNBs 24_{1∼m}, and cells 25_{1∼m}. The NMS 21 manages the entire communication system 20. The EMS 22 manages the eNBs 24_{1∼n}. The EMS 23 manages the eNBs 24_{n+1∼m}. The eNBs 24_{1∼m} are base stations and form the cells 25_{1∼m}, respectively. Note that, although one eNB can form a plurality of cells, it is assumed in this exemplary embodiment that each eNB forms a single cell to simplify the description. Thus, the eNBs 24_{1∼m} form the cells 25_{1∼m}, respectively.

The NMS 21 is connected to the EMS 22 and the EMS 23 through a given interface. The EMS 22 is connected to the eNBs 24_{1∼n} through a given interface. Likewise, the EMS 23 is connected to the eNBs 24_{n+1∼m} through a given interface.

The EMSs 22 and 23 have SON functional units 26 and 27, respectively. In this exemplary embodiment, the EMSs 22 and 23 function as identifier assignment devices.

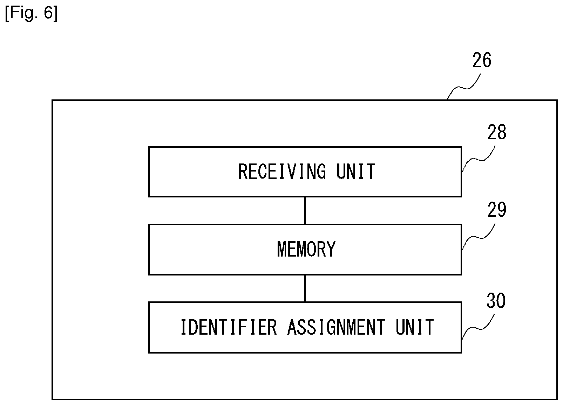

Fig. 6 shows a configuration of the SON functional unit 26. Note that the configuration of the SON functional unit 27 is the same as that of the SON functional unit 26 and thus not repeatedly described.

As shown in Fig. 6, the SON functional unit 26 includes a receiving unit 28, a memory 29, and an identifier assignment unit 30. The receiving unit 28 receives neighbour information. The memory 29 stores the received neighbour information. The identifier assignment unit 30 assigns an identifier to a cell formed by an eNB connected to the EMS 22. The identifier assigned to a cell includes a PCI.

Note that the neighbour information is information containing identifier information of an adjacent cell. Further, the adjacent cell means a cell to which handover can be made by a mobile terminal, and it includes a cell with which a cover area overlaps. For example, assuming that cells to which handover can be made from the cell 251 by a mobile terminal are the cell 25₂, the cell 25₉ and the cell 25₁₀. In this case, adjacent cells of the cell 25₁ are the cell 25₂, the cell 25₉ and the cell 25₁₀.

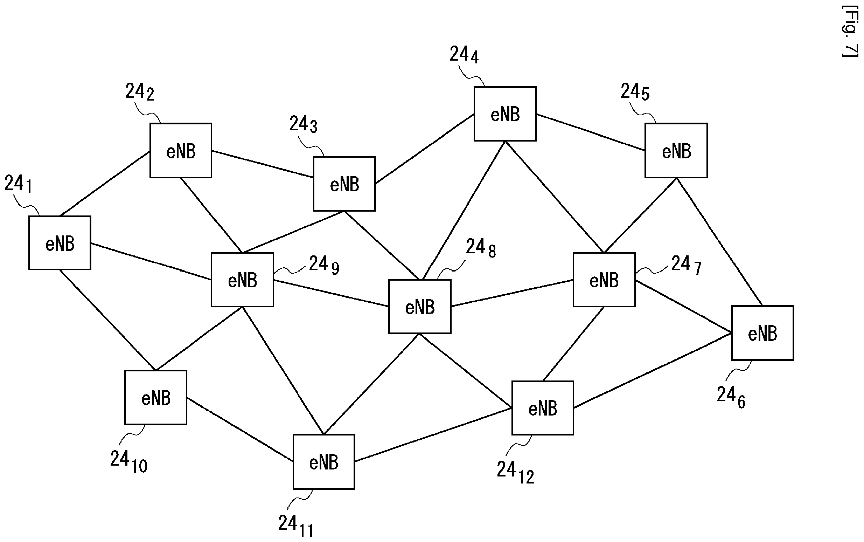

Further, the eNBs 24_{1∼m} can establish an X2 interface with another eNB. The X2 interface is an interface specified by the 3GPP (3rd Generation Partnership Project) standard. Typically, the X2 interface is often established between eNBs that form adjacent cells. In this exemplary embodiment, the X2 interface is established between eNBs connected by a solid line as shown in Fig. 7. Note that Fig. 7 shows the configuration in the case of m=12, that is, the communication system 20 includes eNBs 24 _{1∼12}.

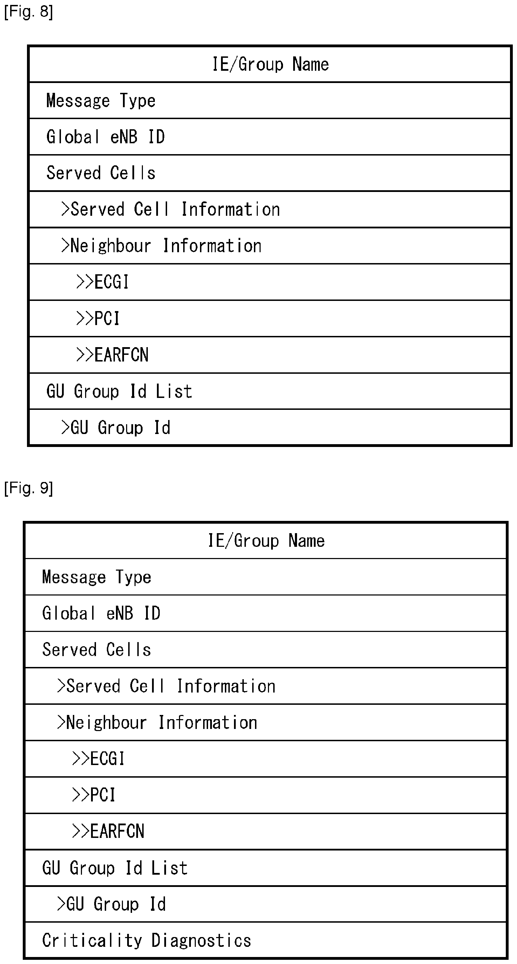

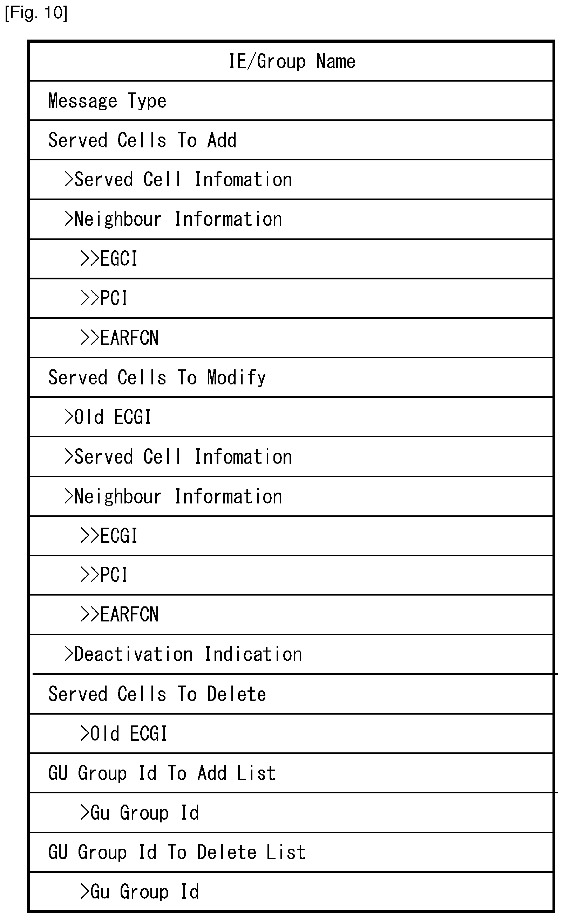

The eNBs that are connected to each other through the X2 interface can transmit and receive neighbour information of the cell formed by themselves by transmitting and receiving a message. The message transmitted and received by the eNBs is an X2 setup request message, an X2 setup response message, or an ENB configuration update message. The X2 setup request message and the X2 setup response message are messages transmitted and received at the time of newly establishing the X2 interface between eNBs. The ENB configuration update message is a message transmitted and received between eNBs when an information element such as the neighbour information is changed. Figs. 8 to 10 show IE (Information Element) contained in each message. As shown in Figs. 8 to 10, the neighbour information is composed of a list containing a combination of ECGI (E-UTRAN Cell Global Identifier), PCI, and EARFCN (E-UTRAN Absolute Radio Frequency Channel Number). The ECGI is an identifier that uniquely identifies a cell. The PCI is one of radio resources, and it is a physical cell identifier that is assigned to a cell. In the LTE, 504 different PCIs, from 0 to 503, are used. The EARFCN is one of radio resources, and it corresponds to a frequency used by a cell.

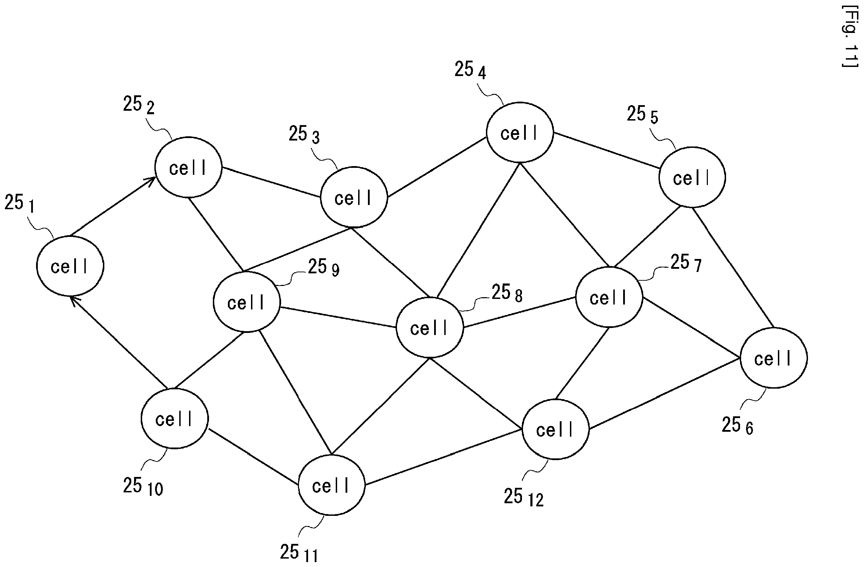

Fig. 11 shows the adjacent relation of cells 25_{1∼12} formed by the eNBs 24_{1∼12}. In Fig. 11, cells connected by a solid line with no arrow mean that they are adjacent cells that are adjacent to each other. Accordingly, the neighbour information of one cell contains the identifier information of the other cell. Cells connected by a solid line with an arrow mean that adjacent cells of the cell from which the arrow starts include the cell to which the arrow is pointing but adjacent cells of the cell to which the arrow is pointing do not include the cell from which the arrow starts. Accordingly, the neighbour information of the cell from which the arrow starts contains the identifier information of the cell to which the arrow is pointing. On the other hand, the neighbour information of the cell to which the arrow is pointing does not contain the identifier information of the cell from which the arrow starts. In other words, the neighbour information of one cell does not contain the identifier information of the other cell.

The ECGI, PCI and EARFCN are assigned to each of the cells 25_{1∼12}. The ECGIs assigned to the cells 25_{1∼12} are ECGI_{1∼12}, respectively. Because the ECGI is an identifier unique to a cell, the ECGI_{1∼12} are different from one another. On the other hand, the EARFCNs assigned to the cells 25_{1∼12} are all common. Further, the PCIs assigned to the cells 25_{1∼12} are PCI_{1∼12}, respectively. Although the same PCI value can be assigned to a plurality of cells, the PCI needs to be collision-free and confusion-free.

The collision-free means that the PCI of an area covered by a cell is one, that is, the areas covered by cells having the same PCI do not overlap. In this exemplary embodiment, when a combination of EARFCN and PCI of a certain cell is different from a combination of EARFCN and PCI of a cell contained in the neighbor information of that cell, collision-free is achieved.

The confusion-free means that adjacent cells of a certain cell do not include a plurality of cells having the same PCI. In this exemplary embodiment, when the neighbour information of a certain cell does not contain two or more cells having the same EARFCN and the same PCI, confusion-free is achieved.

The operation of the communication system 20 according to this exemplary embodiment is described hereinafter. The case of assigning a PCI to the cell 251 formed by the eNB 24₁ is described in this example.

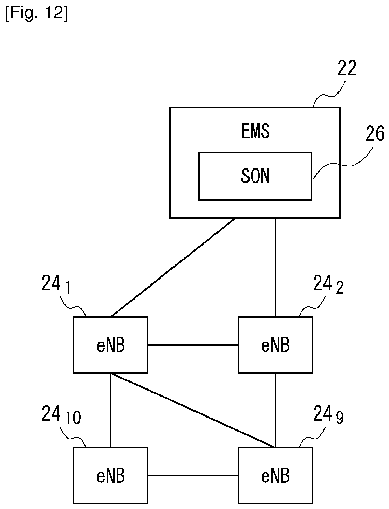

Fig. 12 shows the relation of the EMS 22 and the eNBs 24_{1,2,9,10} included in the communication system 20. As shown in Fig. 12, the eNB 24₁ that forms the cell 251 and the eNB 24₂ that forms the cell 25₂ are connected to the EMS 22 having the SON functional unit 26, and the eNB 24₉ that forms the cell 25₉ and the eNB 24₁₀ that forms the cell 25₁₀ are not connected to the EMS 22. Further, the X2 interface is established between the eNB 24₁ and each of the eNB 24₂, eNB 24₉ and eNB 24₁₀. Further, the X2 interface is established between the eNB 24₂ and eNB 24₉ and between the eNB 24₁₀ and eNB 24₉. See Fig. 11 for the adjacent relation of the cells. Referring to Fig. 11, adjacent cells of the cell 25₁ are the cell 25₂ and the cell 25₉.

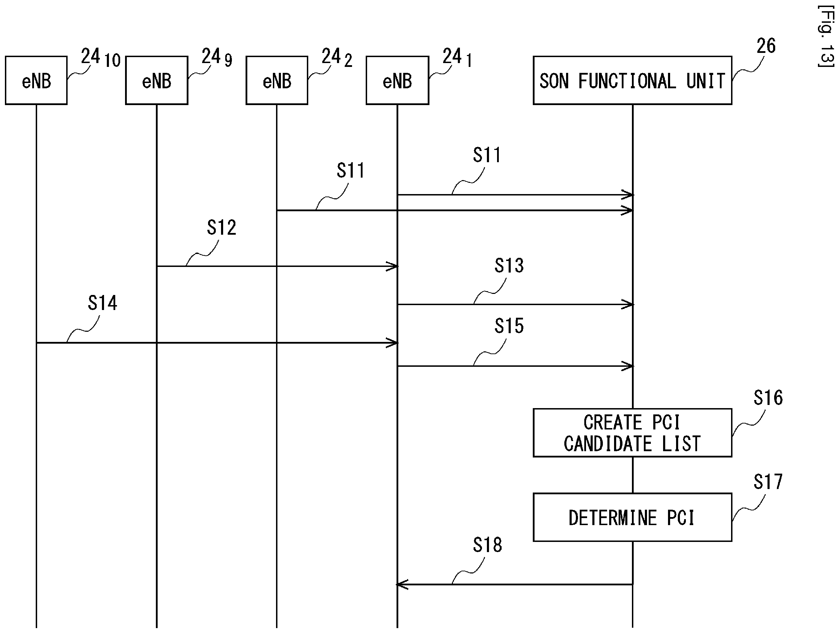

Fig. 13 shows an operation flow of the communication system 20. First, the eNB 24₁ and the eNB 24₂ transmit the neighbour information containing the identifier information of adjacent cells of the cell 25₁ and the cell 25₂ formed by themselves to the SON functional unit 26 (Step S11). The receiving unit 28 of the SON functional unit 26 receives the neighbour information of each of the cell 25₁ and the cell 25₂, and the memory 29 stores them. Note that, although the neighbour information of the cell 25₁ and the cell 25₂ are first transmitted to the SON functional unit 26, this operation may be performed at some point between Step S12 and Step S16, which are described later.

The eNB 24₉ transmits the neighbour information containing the identifier information of adjacent cells of the cell 25₉ formed by itself to the eNB 24₁ (Step S12). For example, the eNB 24₉ transmits the neighbour information of the cell 25₉ to the eNB 24₁ by adding it to the ENB configuration update message.

The eNB 24₁ receives the neighbour information of the cell 25₉ and then transmits the received neighbour information to the SON functional unit 26 (Step S13). The receiving unit 28 of the SON functional unit 26 receives the neighbour information of the cell 25₉ received from the eNB 24₁. Then, the memory 29 of the SON functional unit 26 stores the neighbour information of the cell 25₉ received by the receiving unit 28.

Likewise, the neighbour information containing the identifier information of adjacent cells of the cell 25₁₀ is transmitted to the SON functional unit 26 through the eNB 24₁ (Steps S14, S15). Note that, because the eNB 24₁₀ is connected also to the eNB 24₂ through the X2 interface, the neighbour information of the cell 25₁₀ may be transmitted to the SON functional unit 26 through the eNB 24₂.

In the above manner, the SON functional unit 26 can store not only the neighbour information of the cell 251 and the cell 252 formed by the eNB 241 and the eNB 242 that are connected to the EMS 22 but also the neighbour information of the cell 259 and the cell 2510 formed by the eNB 249 and the eNB 2410 that are not connected to the EMS 22.

In the event it becomes necessary to assign a PCI to the cell 25₁, the identifier assignment unit 30 of the SON functional unit 26 creates a PCI candidate list of the cell 251 (Step S16). Note that a procedure to create the PCI candidate list of the cell 251 by the identifier assignment unit 30 is described later.

Next, the identifier assignment unit 30 determines a PCI to be assigned to the cell 251 from the PCI candidate list created in Step S16 (Step S17). The identifier assignment unit 30 then notifies the selected PCI to the eNB 24₁ to make PCI assignment to the cell 25₁ (Step S18).

The procedure to create the PCI candidate list of the cell 25₁ by the identifier assignment unit 30 in Step S16 is described hereinafter.

First, the identifier assignment unit 30 creates a first PCI candidate list (Step S22). The first PCI candidate list is a list of all PCIs that can be assigned (for example, PCI_{0 to 503}).

Next, the identifier assignment unit 30 excludes the PCIs of adjacent cells of the cell 25₁ from the PCI candidate list (Step S23). Specifically, the identifier assignment unit 30 reads the neighbour information of the cell 25₁ stored in the memory 29. The neighbour information of the cell 25₁ contains ECGI information and PCI information of the cell 25₂ and the cell 25₉, which are the adjacent cells of the cell 25₁. Then, the identifier assignment unit 30 creates a second PCI candidate list by excluding PCI₂ and PCI₉, which are the PCIs of the cell 25₂ and the cell 25₉, from the first PCI candidate list.

Then, the identifier assignment unit 30 excludes the PCIs of cells whose adjacent cells include the cell 251 from the PCI candidate list (Step S24). Specifically, the identifier assignment unit 30 reads neighbour information of a plurality of cells stored in the memory 29 and determines that the cells whose neighbour information contains the identifier information of the cell 25₁ are the cell 25₉ and the cell 25₁₀. The identifier assignment unit 30 then creates a third PCI candidate list by excluding the PCI₉ and PCI₁₀, which are the PCIs of the cell 25₉ and the cell 25₁₀, from the second PCI candidate list.

Then, the identifier assignment unit 30 excludes the PCIs of adjacent cells of the cells whose adjacent cells include the cell 25₁ from the PCI candidate list (Step S25). Specifically, the identifier assignment unit 30 reads the neighbour information of the PCI₉ and PCI₁₀ whose adjacent cells include the cell 25₁ from the memory 29. The adjacent cells of the cell 25₉ are the cell 25₁, the cell 25₂, the cell 25₃, the cell 25₈, the cell 25₁₀ and the cell 25₁₁. Further, the adjacent cells of the cell 25₁₀ are the cell 25₁, the cell 25₉ and the cell 25₁₁. Thus, the identifier assignment unit 30 creates a fourth PCI candidate list by excluding PCI₂, PCI₃, PCI₈, PCI₉, PCI₁₀ the PCI₁₁, which are the PCIs of those adjacent cells, from the third PCI candidate list. Note that, because PCI₁ is the PCI of the cell 25₁ itself, there is no need to exclude the PCI₁ from the PCI candidate list.

In the above manner, the identifier assignment unit 30 creates the candidate list for a PCI to be assigned to the cell 251.

Then, in Step S17, the identifier assignment unit 30 selects a PCI to be assigned to the cell 25₁ from the fourth PCI candidate list. Note that, when only one PCI remains in the PCI candidate list at some point of Steps S22 to S25, the PCI remaining in the PCI candidate list may be selected at that point and assigned to the cell 25₁.

Note that, when, as a result of performing all of Steps S22 to S25, there remains no PCI in the PCI candidate list, the assignment of a PCI to the cell 25₁ may be cancelled.

Note that, in Step S16, the PCI candidate list is created when it becomes necessary to assign a PCI to the cell 25₁, and the case where it becomes necessary to assign a PCI is when PCI collision or PCI confusion is detected, when the need to change a PCI arises due to the occurrence of interference between cells, when an available PCI changes at operator's convenience or the like, for example. Note that PCI collision or PCI confusion may be detected by the SON functional unit 26 based on a measurement report transmitted from a mobile terminal (for example, UE: User Equipment). In this case, the UE that is communicating with the eNB24₁ transmits the measurement report to the eNB24₁ (Step S19). The eNB24₁ then transfers the measurement report received from the UE to the SON functional unit 26 (Step S20). Then, the SON functional unit 26 detects PCI collision and PCI confusion based on the received measurement report (Step S21).

In the above manner, the communication system 20 according to this exemplary embodiment performs PCI assignment to the cell 25₁. In the fourth PCI candidate list, the PCIs of cells that are likely to have a cover area close to the cover area of the cell 25₁, such as the PCIs of adjacent cells of the cell 25₁, the PCIs of cells whose adjacent cells include the cell 25₁, and the PCIs of adjacent cells of cells whose adjacent cells include the cell 25₁, are excluded. Thus, a PCI different from the PCIs of cells that are likely to have a cover area close to the cover area of the cell 25₁ is assigned to the cell 25₁. Therefore, in the communication system 20 according to this exemplary embodiment, it is possible to assign a PCI that is likely to maintain collision-free and confusion-free without need for any work for measuring the radio environment or detailed information elements for estimating the radio environment.

Note that, although the identifier assignment unit 30 creates the PCI candidate list when it becomes necessary to assign a PCI to the cell 251 in this exemplary embodiment, it is not limited thereto. For example, the PCI candidate list may be created or updated by executing the procedure of Steps S22 to S25 at regular time intervals. Alternatively, the PCI candidate list may be created or updated by executing the procedure of Steps S22 to S25 at the timing when the receiving unit 28 receives new neighbour information.

It should be noted that the PCI assignment in this exemplary embodiment is applicable to both the case of assigning a PCI again to a cell to which a PCI has been assigned and the case of assigning a PCI for the first time to a cell newly added to the communication system.

### Third exemplary embodiment

The third exemplary embodiment of the present invention is described hereinafter. In this exemplary embodiment, a method for increasing the possibility to maintain collision-free and confusion-free by further modifying the PCI candidate list created in the second exemplary embodiment is described. Note that the configuration of the communication system according to this exemplary embodiment is the same as the configuration of the communication system 20 according to the second exemplary embodiment shown in Figs. 5, 7, 11 and 12.

A procedure to create the PCI candidate list by the identifier assignment unit 30 in this exemplary embodiment is described hereinafter.

First, the operation in Steps S22 to S25 in the second exemplary embodiment is performed to thereby create the fourth PCI candidate list.

Next, the identifier assignment unit 30 excludes the PCIs of cells adjacent to the adjacent cells of the cell 251 from the PCI candidate list (Step S31). Specifically, the identifier assignment unit 30 reads the neighbour information of the cell 252 and the cell 25₉, which are the adjacent cells of the cell 251, from the memory 29. The adjacent cells of the cell 25₂ are the cell 25₃ and the cell 25₉. Further, the adjacent cells of the cell 25₉ are the cell 25₁, the cell 25₂, the cell 25₃, the cell 25₈, the cell 25₁₀ and the cell 25₁₁. Thus, the identifier assignment unit 30 creates a fifth PCI candidate list by excluding PCI₂, PCI₃, PCI₈, PCI₉, PCI₁₀ and PCI₁₁, which are the PCIs of the adjacent cells of the cell 25₂ and the cell 25₉, from the fourth PCI candidate list. Note that, because the PCI₁ is the PCI of the cell 25₁ itself, there is no need to exclude the PCI₁ from the PCI candidate list.

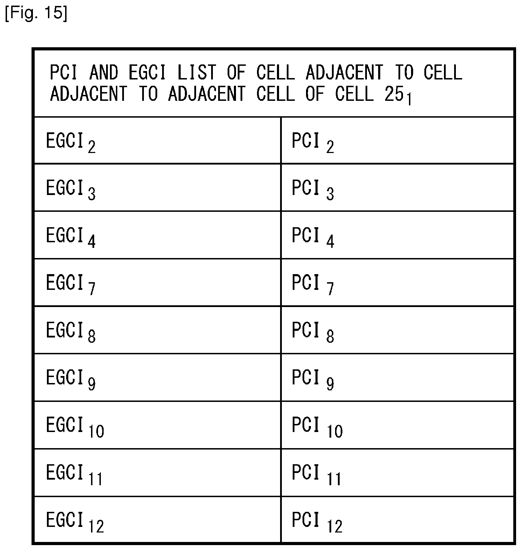

Then, the identifier assignment unit 30 excludes the PCIs of cells adjacent to the cells adjacent to the adjacent cells of the cell 25₁ from the PCI candidate list (Step S32). Specifically, the identifier assignment unit 30 reads the neighbour information of the cell 25₁, the cell 25₂, the cell 25₃, the cell 25₈, the cell 25₉, the cell 25₁₀ and the cell 25₁₁ , which are cells adjacent to the adjacent cells of the cell 25₂ and the cell 25₉, which are the adjacent cells of the cell 25₁. Fig. 15 shows a list of PCIs and EGCIs contained in those neighbour information. Then, a sixth PCI candidate list is created by excluding the PCIs included in the list of Fig. 15 from the fifth PCI candidate list.

In the above manner, the identifier assignment unit 30 creates the candidate list for a PCI to be assigned to the cell 251.

Then, the identifier assignment unit 30 assigns a PCI selected from the sixth PCI candidate list to the cell 251 (Step S33). Note that, when no PCI remains in the PCI candidate list at some point of Steps S31 and S32, the PCI that has remained just before may be assigned to the cell 251.

In the sixth PCI candidate list according to this exemplary embodiment, the PCIs of cells that are likely to have a cover area close to the cover area of the cell 25₁, such as the PCIs of adjacent cells of the cell 25₁, the PCIs of cells adjacent to the adjacent cells of the cell 25₁, and the PCIs of cells adjacent to the cells adjacent to the adjacent cells of the cell 25₁, are excluded. Thus, the identifier assignment unit 30 assigns a PCI different from the PCIs of cells that are likely to have a cover area close to the cover area of the cell 25₁ to the cell 25₁. Therefore, in this exemplary embodiment also, it is possible to assign a PCI that is likely to maintain collision-free and confusion-free even when radio environment changes.

Further, in this exemplary embodiment, Steps S31 and S32 are performed after Steps S23 to S25 in the second exemplary embodiment are performed; however, it is not limited thereto. Specifically, Steps S23 to S25 and Steps S31 and S32 may be performed in any order. Further, it is not necessary to perform all of Steps S23 to S25 and Steps S31 and S32. Specifically, the effect of increasing the possibility to maintain collision-free and confusion-free is obtained as long as some of Steps S23 to S25 and Steps S31 and S32 are performed.

Note that, in this exemplary embodiment, the PCIs of cells adjacent to cells adjacent to the adjacent cells of the cell 251 are excluded from the PCI candidate list in Step S32. Thus, in addition to the neighbour information of the cell 25₁, the cell 25₂, the cell 25₉ and the cell 25₁₀ that are stored into the memory 29 in Steps S11 to S15, the neighbour information of the cell 25₃, the cell 25₈ and the cell 25₁₁ are required. When the eNB 24₃, the eNB 24₈ and the eNB 24₁₁ that respectively form the cell 25₃, the cell 25₈ and the cell 25₁₁ are connected to the EMS 22, each eNB can directly notify the neighbour information of the cell formed by itself to the SON functional unit 26. On the other hand, even the eNB 24₃, the eNB 24₈ and the eNB 24₁₁ are not connected to the EMS 22, if the X2 interface is established with another eNB that is connected to the EMS 22, each eNB can transmit the neighbour information of the cell formed by itself to the SON functional unit 26 through that another eNB.

### Fourth exemplary embodiment

In the second and third exemplary embodiments, the neighbour information necessary for creating the PCI candidate list is stored in the memory 29 before the identifier assignment unit 30 creates the PCI candidate list. However, all of the neighbour information necessary for creating the PCI candidate list are not always collected at the point when the need for PCI assignment arises.

Further, in the second and third exemplary embodiments, the X2 interface is established at least between adjacent cells. However, in some communication systems, the X2 interface is not established even between adjacent cells. Further, there is a case where there is an eNB that is not connected to the EMS 22 including the SON functional unit 26 and that is not connected to any other eNBs connected to the EMS 22 through the X2 interface. Such an eNB cannot transmit neighbour information to the EMS 22 directly or through the X2 interface. This leads to the case where the neighbour information necessary for creating the PCI candidate list is not stored in the memory 29 of the SON functional unit 26.

In view of such a problem, a method for collecting neighbour information in the case where the SON functional unit 26 does not store the neighbour information necessary for creating the PCI candidate list is described in the fourth exemplary embodiment of the present invention.

It is assumed in this example that the neighbour information that is not stored in the SON functional unit 26 is the neighbour information of the cell 25₈ formed by the eNB 24₈.

First, the case where the EMS 22 including the SON functional unit 26 and the eNB 24₈ are connected is described. In this case, the SON functional unit 26 requests the eNB 24₈ to transmit neighbour information. Receiving the request from the SON functional unit 26, the eNB 24₈ transmits the neighbour information of the cell 25₈ formed by itself to the SON functional unit 26. The SON functional unit 26 can thereby collect the neighbour information of the cell 25₈.

Next, the case where the eNB 24₃ that establishes the X2 interface with the eNB 24₈ is connected to the EMS 22 is described. In this case, the SON functional unit 26 requests the eNB 24₈ to transmit neighbour information through the X2 interface between the eNB 24₃ and the eNB 24₈. Receiving the request, the eNB 24₈ transmits the neighbour information of the cell 25₈ formed by itself to the eNB 24₃ through the X2 interface. Then, the eNB 24₃ transmits the neighbour information of the cell 25₈ to the SON functional unit 26. The SON functional unit 26 can thereby collect the neighbour information of the cell 25₈.

Next, the case where any of eNBs that establish a communication channel with the eNB 24₈ are not connected to the EMS 22 is described. In this case, the SON functional unit 26 requests any eNB (which is referred to hereinafter as a sub-eNB) of the eNBs connected to the EMS 22 to establish a communication channel (which is the X2 interface in this example) with the eNB 24₈ (Step S41). When the sub-eNB that has received the request from the SON functional unit 26 knows the X2 TNL (Transport Network Layer) address of the eNB 24₈, the sub-eNB operates as follows. Specifically, the sub-eNB establishes an SCTP interface with the eNB 24₈ and then transmits an X2 setup request message to the eNB 24₈ (Step S42). The eNB 24₈ then transmits an X2 setup response message to the sub-eNB (Step S43). In this step, the eNB 24₈ adds the neighbour information of the cell 25₈ to the X2 setup response message. The sub-eNB then transmits the received neighbour information of the cell 258 to the SON functional unit 26 (Step S44). The SON functional unit 26 can thereby collect the neighbour information of the cell 25₈.

On the other hand, when the sub-eNB that has received the request from the SON functional unit 26 does not know the X2 TNL address of the eNB 24₈, the sub-eNB operates as follows. Specifically, the sub-eNB acquires the X2 TNL address of the eNB 24₈ by using the S1 interface. The sub-eNB can thereby perform the operation of Step S42 and the subsequent steps.

Finally, the case where the eNB 24₈ is connected to the SON functional unit 26 of the EMS 23 that is connected to the EMS 22 is described. Note that the EMS 22 may be connected to the EMS 23 though not shown in Fig. 5. In this case, when the SON functional unit 27 stores the neighbour information of the cell 25₈, the SON functional unit 26 can collect the neighbour information of the cell 25₈ from the SON functional unit 27. On the other hand, when the SON functional unit 27 does not store the neighbour information of the cell 25₈, the SON functional unit 26 requests the eNB 24₈ to transmit the neighbour information of the cell 25₈ to the SON functional unit 27 through the SON functional unit 27. Then, the SON functional unit 27 transmits the neighbour information of the cell 258 transmitted from the eNB 24₈ to the SON functional unit 26. The SON functional unit 26 can thereby collect the neighbour information of the cell 25₈.

Note that the timing when the SON functional unit 26 makes a request for collecting the neighbour information of the cell 25₈ may be just before or during the creation of the PCI candidate list. Alternatively, it may be the point of time when it is estimated or detected that the cover area of another cell and the cover area of the cell 25₈ are close to each other.

In the above manner, the SON functional unit 26 can collect the neighbour information required for creating the PCI candidate list. Therefore, it is possible to exclude the PCIs of other cells that are likely to have a cover area close to the cover area of the cell from the candidate list for a PCI to be assigned to the cell. It is thereby possible to increase the possibility to maintain collision-free and confusion-free in the PCI assignment.

Although preferred exemplary embodiments of the present invention are explained in detail in the foregoing, the present invention is not limited thereto, and various changes may be made without departing from the scope of the claims.

For example, although the PCI candidate list is created using neighbour information in the first to fourth exemplary embodiments, other information may be used as well. For example, the SON functional unit may also collect position information (for example, latitude and longitude) of an eNB through the X2 interface. As the position information, GNSS (Global Navigation Satellite System(s)) may be used, for example. Note that the position information may be transmitted and received at the same timing as the neighbour information. For example, information of the GNSS may be added, together with the neighbour information, to the X2 setup request message, the X2 setup response message, the ENB configuration update message or the like. Alternatively, the position information may be transmitted and received at different timing from the neighbour information.

The SON functional unit may determine a cell whose cover area is close more accurately by referring to the received position information. Therefore, it is possible to exclude the PCI of a cell that is determined to have a nearby cover area from the PCI candidate list even if it is not an adjacent cell. Further, because a cell whose cover area is significantly close can be specified among adjacent cells, it is possible to set an order of priority for exclusion from the PCI candidate list. Consequently, it is possible to further increase the possibility to maintain collision-free and confusion-free in the PCI assignment.

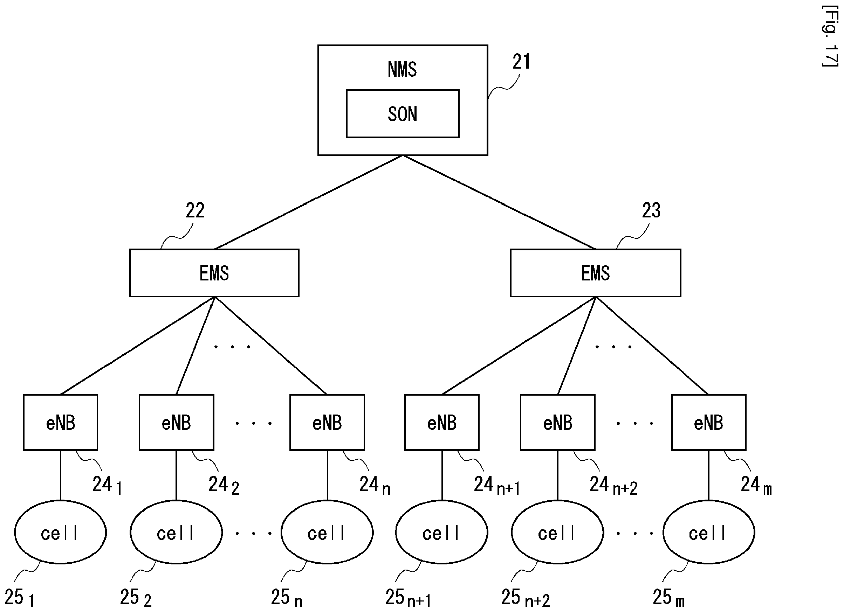

Further, although the communication system 20 according to the second to fourth exemplary embodiments is EM-centralized SON in which the EMSs 22 and 23 include the SON functional unit, it is not limited thereto. For example, it may be NM-centralized SON in which the NMS 21 includes the SON functional unit as shown in Fig. 17. In this case, the SON functional unit of the NMS 21 receives neighbour information transmitted from each eNB through the EMS 22 or the EMS 23. Alternatively, the NMS 21 and the EMSs 22 and 23 each may include the SON functional unit.

Further, a core network device (for example, MME (Mobility Management Entity), gateway device etc.) in the core network may include the SON functional unit. In this case, the neighbour information of a cell formed by an eNB is acquired through the SI interface. Further, in the communication system in which SGSN (Serving GPRS Support Node) is included in the core network, the SGSN may include the SON functional unit.

Note that the SON functional unit may be included in an O&M (Operations and Maintenance) functional unit that can communicate with a base station. For example, in the second exemplary embodiment, the EMS 22 may include the O&M functional unit, and the O&M functional unit may include the SON functional unit.

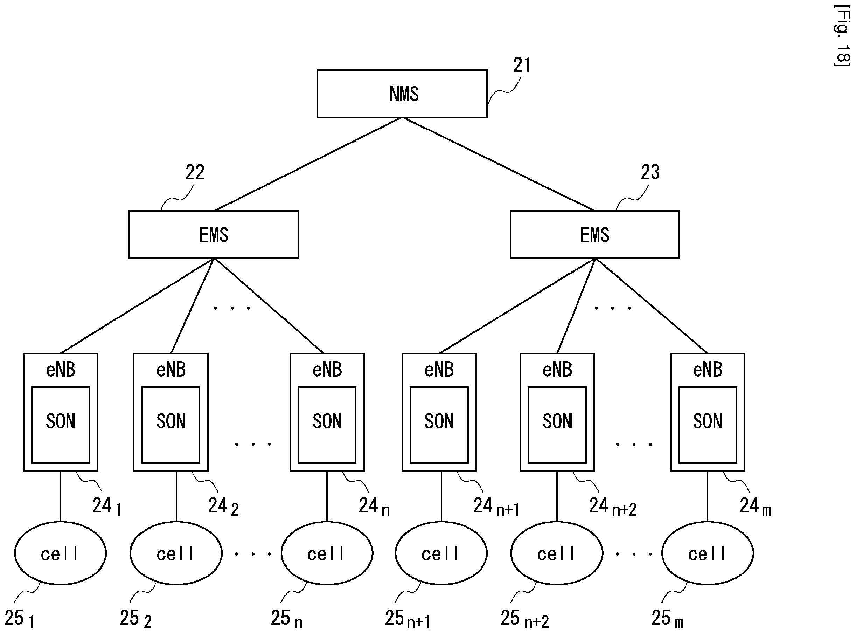

Further, although the communication system 20 according to the second to fourth exemplary embodiments is the LTE system having the centralized SON function, it is not limited thereto. For example, the communication system 20 may be applied to the LTE system having the distributed SON function as shown in Fig. 18. The distributed SON function means that the SON functional unit exists in NE (Network Element) level (for example, eNB). In this case, the SON functional unit acquires the neighbour information of a cell formed by an eNB through the X2 interface. In the case of collecting the neighbour information of a cell formed by an eNB with which the X2 interface is not established, the X2 setup request message may be transmitted to a desired eNB in the same manner as described in the fourth exemplary embodiment. Then, the neighbour information may be added to the X2 setup response message in response to the X2 setup request message. The SON functional unit of the eNB can thereby collect the desired neighbour information.

Further, the communication system according to the first to fourth exemplary embodiments may be applied to a system other than the LTE system. Specifically, the communication system according to the present invention is applicable to any system which assigns an identifier to a cell and in which information containing identifiers of adjacent cells such as the neighbour information is available.

Further, in the present invention, a method of forming the neighbour information, which is, the way of determining the adjacent cell relation, is not particularly limited. For example, the SON functional unit may adjust the adjacent cell relation based on the report records of the measurement report transmitted from a mobile terminal. Alternatively, without using the SON function, adjacent cells of a cell formed by a base station may be determined on the basis of the cell layout or drive test results.

Further, each operation of the communication system described in the first to fourth exemplary embodiments may be controlled by a CPU (Central Processing Unit) of a device included in the communication system shown in Figs. 1 and 5 or another device that can communicate with the device. In this case, a storage medium storing program codes of software that implements the functions of each exemplary embodiment is prepared, and the CPU operates in accordance with the program codes stored in the storage medium and read by a general-purpose computer, thereby implementing the operation.

The program can be stored and provided to the computer using any type of non-transitory computer readable medium. The non-transitory computer readable medium includes any type of tangible storage medium. Examples of the non-transitory computer readable medium include magnetic storage media (such as floppy disks, magnetic tapes, hard disk drives, etc.), optical magnetic storage media (e.g. magnetooptical disks), CD-ROM (Read Only Memory), CD-R , CD-R/W, and semiconductor memories (such as mask ROM, PROM (Programmable ROM), EPROM (Erasable PROM), flash ROM, RAM (Random Access Memory), etc.). The program may be provided to a computer using any type of transitory computer readable medium. Examples of the transitory computer readable medium include electric signals, optical signals, and electromagnetic waves. The transitory computer readable medium can provide the program to a computer via a wired communication line such as an electric wire or optical fiber or a wireless communication line.

Further, the cell is a base unit of a service coverage, and it is called a sector cell when the service area of an eNB is divided by a sector antenna (antenna with directionality in a horizontal plane) or the like, and called an omni-cell when the service area is not divided (an omni-antenna with no directionality in a horizontal plane is used). Although the case of the omni-cell is described in the first to fourth exemplary em- bodiments of the present invention to simplify the description, the present invention may be applied equally to the sector cell.

Further, in the second to fourth exemplary embodiments, the type of a base station is not particularly limited. Specifically, the bases station may be any of a macro bases station that forms a macro cell, a pico base station that forms a pico cell, and a femto base station (HNB or HeNB) that forms a femto cell.

According to the exemplary embodiment of the present invention, an identifier assignment device can know identifier information of adjacent cells of a cell formed by a base station that is not connected to the identifier assignment device.

### Reference Signs List

10, 20 communication system
11 first base station
12 second base station
13 identifier assignment device
14 receiving unit
15 transmitting unit
17, 30 identifier assignment unit
21 NMS
22, 23 EMS
24 eNB
25 cell
26, 27 SON functional unit
29 memory

## Claims

1. A communication system (10) comprising:
a first base station (11) that forms a first cell;
a second base station (12) that forms a second cell;
a third base station that forms a third cell; and
an identifier assignment device (13) that is configured to assign an identifier for identifying the second cell, wherein the identifier assignment device is part of a centralized self organizing network, SON, function of an operations, administration and maintenance, OAM, system, wherein:
the first cell, which is not connected to the SON function, is a neighbor cell of the second cell;
the third cell is a neighbor cell of the first cell;
the second cell and the third cell are connected to an element management system, EMS, having the SON function;
the first base station (11) is configured to transmit first neighbor cell information, containing identifier information of neighbor cells of the first cell to the second base station (12);
the second base station (12) is configured to transmit the first neighbor cell information, received from the first base station (11), and second neighbor cell information, containing identifier information of neighbor cells of the second cell, to the identifier assignment device (13);
the third base station is configured to transmit third neighbor cell information, containing identifier information of neighbor cells of the third cell, to the identifier assignment device (13) directly or through another base station that is connected to the identifier assignment device (13); and
the identifier assignment of the identifier of the second cell is based on the third neighbor cell information, on the second neighbor cell information, and on the first neighbor cell information;
wherein the identifier assignment device (13) is configured to assign the identifier of the second cell by:
creating an identifier candidate list containing only those identifiers that are not allocated to a cell in the first, second, and third neighbour cell information;
determining an identifier to be assigned to the second cell from the identifier candidate list; and
notifying the selected identifier to the second base station (12).

2. The communication system (10) according to Claim 1, further comprising:
a fourth base station that forms a fourth cell included in a neighbor cell list of the second cell, wherein
when a communication channel is not established between the second base station (12) and the fourth base station, the identifier assignment device (13) is configured to request the second base station (12) to establish a communication channel between the second base station (12) and the fourth base station.

3. An identifier assignment device (13) in a communication system (10) including a first base station (11) forming a first cell, a second base station (12) forming a second cell, and a third base station forming a third cell, wherein the identifier assignment device is part of a centralized self organizing network, SON, function of an operations, administration and maintenance, OAM, system and wherein the first cell is a neighbor cell of the second cell and the third cell is a neighbor cell of the first cell and wherein the first cell is not connected to the SON function and the second cell and the third cell are connected to an element management system, EMS, having the SON function, the identifier assignment device (13) assigning an identifier of the second cell, comprising:
a receiving means (16) for receiving first neighbor cell information, containing identifier information of neighbor cells of the first cell, and second neighbor cell information, containing identifier information of neighbor cells of the second cell, from the second base station (12), and for receiving third neighbor cell information, containing identifier information of neighbor cells of the third cell, from the third base station directly or through another base station that is connected to the identifier assignment device (13); and
an identifier assignment means (17) for assigning the identifier of the second cell based on the third neighbor cell information received by the receiving means (16) , on the second neighbor cell information received by the receiving means (16), and on the first neighbor cell information received by the receiving means (16);
wherein the identifier assignment means (17) is configured to assign the identifier of the second cell by:
creating an identifier candidate list containing only those identifiers that are not allocated to a cell in the first, second, and third neighbour cell information;
determining an identifier to be assigned to the second cell from the identifier candidate list; and
notifying the selected identifier to the second base station (12).

4. An identifier assignment method performed by a communication system (10) including a first base station (11) forming a first cell, a second base station (12) forming a second cell, a third base station forming a third cell, and an identifier assignment device (13) that assigns an identifier of the second cell, wherein the identifier assignment device is part of a centralized self organizing network, SON, function of an operations, administration and maintenance, OAM, system, wherein the first cell is a neighbor cell of the second cell and the third cell is a neighbor cell of the first cell, and wherein the first cell is not connected to the SON function and the second cell and the third cell are connected to an element management system, EMS, having the SON function, the method comprising:
the first base station (11) transmitting first neighbor cell information, containing identifier information of neighbor cells of the first cell, to the second base station (12) **;**
the second base station (12) transmitting the first neighbor cell information, received by the second base station (12), and second neighbor cell information, containing identifier information of neighbor cells of the second cell, to the identifier assignment device (13);
the third base station transmitting third neighbor cell information, containing identifier information of neighbor cells of the third cell, to the identifier assignment device (13) directly or through another base station that is connected to the identifier assignment device (13); and
the identifier assignment device (13) assigning the identifier of the second cell based on the third neighbor cell information received by the identifier assignment device (13) , on the second neighbor cell information received by the identifier assignment device (13), and on the first neighbor cell information received by the identifier assignment device (13);
the assigning the identifier of the second cell comprising:
creating an identifier candidate list containing only those identifiers that are not allocated to a cell in the first, second, and third neighbour cell information;
determining an identifier to be assigned to the second cell from the identifier candidate list; and
notifying the selected identifier to the second base station (12).

5. A method performed by an identifier assignment device (13) in a communication system (10) including a first base station (11) forming a first cell, a second base station (12) forming a second cell, and a third base station forming a third cell, wherein the identifier assignment device is part of a centralized self organizing network, SON, function of an operations, administration and maintenance, OAM, system, and wherein the first cell is not connected to the SON function and the second cell and the third cell are connected to an element management system, EMS, having the SON function, the identifier assignment device (13) assigning an identifier of the second cell, the method comprising:
receiving first neighbor cell information, containing identifier information of neighbor cells of the first cell, and second neighbor cell information, containing identifier information of neighbor cells of the second cell, from the second base station (12);
receiving third neighbor cell information, containing identifier information of neighbor cells of the third cell, from the third base station directly or through another base station that is connected to the identifier assignment device (13); and
assigning the identifier of the second cell based on the received third neighbor cell information , on the received second neighbor cell information, and on the received first neighbor cell information;
the assigning the identifier of the second cell comprising:
creating an identifier candidate list containing only those identifiers that are not allocated to a cell in the first, second, and third neighbour cell information;
determining an identifier to be assigned to the second cell from the identifier candidate list; and
notifying the selected identifier to the second base station (12).

6. A computer program product comprising instructions for causing a computer-programmable device to become configured as the identifier assignment device (13) according to Claim 3.

## Patentansprüche

1. Kommunikationssystem (10), das aufweist:
eine erste Basisstation (11), die eine erste Zelle bildet;
eine zweite Basisstation (12), die eine zweite Zelle bildet;
eine dritte Basisstation, die eine dritte Zelle bildet; und
eine Identifikatorzuweisungsvorrichtung (13), die konfiguriert ist, um einen Identifikator zum Identifizieren der zweiten Zelle zuzuweisen, wobei die Identifikatorzuweisungsvorrichtung Teil einer zentralisierten sich selbst organisierenden Netzwerk-, SON-, Funktion eines Betriebs-, Verwaltungs- und Wartungs-, OAM-, Systems ist, wobei:
die erste Zelle, die nicht mit der SON-Funktion verbunden ist, eine Nachbarzelle der zweiten Zelle ist;
die dritte Zelle eine Nachbarzelle der ersten Zelle ist;
die zweite Zelle und die dritte Zelle mit einem Elementmanagementsystem, EMS, das die SON-Funktion hat, verbunden sind;
die erste Basisstation (11) konfiguriert ist, um erste Nachbarzelleninformationen, die Identifikatorinformationen von Nachbarzellen der ersten Zelle enthalten, an die zweite Basisstation (12) zu übertragen;
die zweite Basisstation (12) konfiguriert ist, um die ersten Nachbarzelleninformationen, die von der ersten Basisstation (11) empfangen werden, und die zweiten Nachbarzelleninformationen, die Identifikatorinformationen von Nachbarzellen der zweiten Zelle enthalten, an die Identifikatorzuweisungsvorrichtung (13) zu übertragen;
die dritte Basisstation konfiguriert ist, um dritte Nachbarzelleninformationen, die Identifikatorinformationen von Nachbarzellen der dritten Zelle enthalten, direkt oder durch eine andere Basisstation, die mit der Identifikatorzuweisungsvorrichtung (13) verbunden ist, an die Identifikatorzuweisungsvorrichtung (13) zu übertragen; und
die Identifikatorzuweisung des Identifikators der zweiten Zelle auf den dritten Nachbarzelleninformationen, auf den zweiten Nachbarzelleninformationen und auf den ersten Nachbarzelleninformationen basiert;
wobei die Identifikatorzuweisungsvorrichtung (13) konfiguriert ist, um den Identifikator der zweiten Zelle zuzuweisen durch:
Erzeugen einer Identifikatorkandidatenliste, die nur die Identifikatoren enthält, die keiner Zelle in den ersten, zweiten und dritten Nachbarzelleninformationen zugewiesen sind;
Bestimmen eines Identifikators, welcher der zweiten Zelle zugewiesen ist, aus der Identifikatorkandidatenliste; und
Melden des ausgewählten Identifikators an die zweite Basisstation (12).

2. Kommunikationssystem (10) nach Anspruch 1, das ferner aufweist:
eine vierte Basisstation, die eine vierte Zelle bildet, die in einer Nachbarzellenliste der zweiten Zelle enthalten ist, wobei
die Identifikatorzuweisungsvorrichtung (13) konfiguriert ist, um, wenn kein Kommunikationskanal zwischen der zweiten Basisstation (12) und der vierten Basisstation eingerichtet ist, die zweite Basisstation (12) aufzufordern, einen Kommunikationskanal zwischen der zweiten Basisstation (12) und der vierten Basisstation einzurichten.

3. Identifikatorzuweisungsvorrichtung (13) in einem Kommunikationssystem (10), das eine erste Basisstation (11), die eine erste Zelle bildet, eine zweite Basisstation (12), die eine zweite Zelle bildet, und eine dritte Basisstation, die eine dritte Zelle bildet, umfasst, wobei die Identifikatorzuweisungsvorrichtung Teil einer zentralisierten sich selbst organisierenden Netzwerk-, SON-, Funktion eines Betriebs-, Verwaltungs- und Wartungs-, OAM-, Systems ist, und wobei die erste Zelle eine Nachbarzelle der zweiten Zelle ist und die dritte Zelle eine Nachbarzelle der ersten Zelle ist, und wobei die erste Zelle nicht mit der SON-Funktion verbunden ist und die zweite Zelle und die dritte Zelle mit einem Elementmanagementsystem, EMS, das die SON-Funktion hat, verbunden sind, wobei die Identifikatorzuweisungsvorrichtung (13) eine Kennung der zweiten Zelle zuweist, die aufweist:
eine Empfangseinrichtung (16) zum Empfangen erster Nachbarzelleninformationen, die Identifikatorinformationen von Nachbarzellen der ersten Zelle und zweite Nachbarzelleninformationen, die Identifikatorinformationen von Nachbarzellen der zweiten Zelle enthalten, von der zweiten Basisstation (12), und zum Empfangen dritter Nachbarzelleninformationen, die Identifikatorinformationen von Nachbarzellen der dritten Zelle enthalten, direkt oder durch eine andere Basisstation, die mit der Identifikatorzuweisungsvorrichtung (13) verbunden ist, von der dritten Basisstation; und
eine Identifikatorzuweisungseinrichtung (17) zum Zuweisen des Identifikators der zweiten Zelle basierend auf den dritten Nachbarzelleninformationen, die von der Empfangseinrichtung (16) empfangen werden, auf den zweiten Nachbarzelleninformationen, die von der Empfangseinrichtung (16) empfangen werden, und auf den ersten Nachbarzelleninformationen, die von der Empfangseinrichtung (16) empfangen werden;
wobei die Identifikatorzuweisungsvorrichtung (17) konfiguriert ist, um den Identifikator der zweiten Zelle zuzuweisen durch:
Erzeugen einer Identifikatorkandidatenliste, die nur die Identifikatoren enthält, die keiner Zelle in den ersten, zweiten und dritten Nachbarzelleninformationen zugewiesen sind;
Bestimmen eines Identifikators, welcher der zweiten Zelle zugewiesen werden soll, aus der Identifikatorkandidatenliste; und
Melden des ausgewählten Identifikators an die zweite Basisstation (12).

4. Identifikatorzuweisungsverfahren, das von einem Kommunikationssystem (10) durchgeführt wird, das umfasst: eine erste Basisstation (11), die eine erste Zelle bildet, eine zweite Basisstation (12), die eine zweite Zelle bildet, eine dritte Basisstation, die eine dritte Zelle bildet, und eine Identifikatorzuweisungsvorrichtung (13), die einen Identifikator der zweiten Zelle zuweist, wobei die Identifikatorzuweisungsvorrichtung Teil einer zentralisierten sich selbst organisierenden Netzwerk-, SON-, Funktion eines Betriebs-, Verwaltungs- und Wartungs-, OAM-, Systems ist, wobei die erste Zelle eine Nachbarzelle der zweiten Zelle ist und die dritte Zelle eine Nachbarzelle der ersten Zelle ist, und wobei die erste Zelle nicht mit der SON-Funktion verbunden ist und die zweite Zelle und die dritte Zelle mit einem Elementmanagementsystem, EMS, das die SON-Funktion hat, verbunden sind, wobei das Verfahren aufweist:
Übertragen erster Nachbarzelleninformationen, die Identifikatorinformationen von Nachbarzellen der ersten Zelle enthalten, an die zweite Basisstation (12) durch die erste Basisstation (11);
Übertragen der ersten Nachbarzelleninformationen, die von der zweiten Basisstation (12) empfangen werden, und zweiter Nachbarzelleninformationen, die Identifikatorinformationen von Nachbarzellen der zweiten Zelle enthalten, an die Identifikatorzuweisungsvorrichtung (13) durch die zweite Basisstation (12);
wobei die dritte Basisstation dritte Nachbarzelleninformationen, die Identifikatorinformationen von Nachbarzellen der dritten Zelle enthalten, direkt oder durch eine andere Basisstation, die mit der Identifikatorzuweisungsvorrichtung (13) verbunden ist, an die Identifikatorzuweisungsvorrichtung (13) überträgt; und
wobei die Identifikatorzuweisungseinrichtung (13) den Identifikator der zweiten Zelle basierend auf den dritten Nachbarzelleninformationen, die von der Identifikatorzuweisungsvorrichtung (13) empfangen werden, auf den zweiten Nachbarzelleninformationen, die von der Identifikatorzuweisungsvorrichtung (13) empfangen werden, und auf den ersten Nachbarzelleninformationen, die von der Identifikatorzuweisungsvorrichtung (13) empfangen werden, zuweist;
wobei die Zuweisung des Identifikators der zweiten Zelle aufweist:
Erzeugen einer Identifikatorkandidatenliste, die nur die Identifikatoren enthält, die keiner Zelle in den ersten, zweiten und dritten Nachbarzelleninformationen zugewiesen sind;
Bestimmen eines Identifikators, welcher der zweiten Zelle zugewiesen ist, aus der Identifikatorkandidatenliste; und
Melden des ausgewählten Identifikators an die zweite Basisstation (12).

5. Verfahren, das von einer Identifikatorzuweisungsvorrichtung (13) in einem Kommunikationssystem (10), das eine erste Basisstation (11), die eine erste Zelle bildet, eine zweite Basisstation (12), die eine zweite Zelle bildet, und eine dritte Basisstation, die eine dritte Zelle bildet, umfasst, durchgeführt wird, wobei die Identifikatorzuweisungsvorrichtung Teil einer zentralisierten sich selbst organisierenden Netzwerk-, SON-, Funktion eines Betriebs-, Verwaltungs- und Wartungs-, OAM-, Systems ist, und wobei die erste Zelle nicht mit der SON-Funktion verbunden ist, und die zweite Zelle und die dritte Zelle mit einem Elementmanagementsystem, EMS, das die SON-Funktion hat, verbunden sind, wobei die Identifikatorzuweisungsvorrichtung (13) eine Kennung der zweiten Zelle zuweist, wobei das Verfahren aufweist:
Empfangen erster Nachbarzelleninformationen, die Identifikatorinformationen von Nachbarzellen der ersten Zelle und zweite Nachbarzelleninformationen, die Identifikatorinformationen von Nachbarzellen der zweiten Zelle enthalten, von der zweiten Basisstation (12);
Empfangen dritter Nachbarzelleninformationen, die Identifikatorinformationen von Nachbarzellen der dritten Zelle enthalten, direkt oder durch eine andere Basisstation, die mit der Identifikatorzuweisungsvorrichtung (13) verbunden ist, von der dritten Basisstation; und
Zuweisen des Identifikators der zweiten Zelle basierend auf den empfangenen dritten Nachbarzelleninformationen, auf den empfangenen zweiten Nachbarzelleninformationen und auf den empfangenen ersten Nachbarzelleninformationen;
wobei das Zuweisen des Identifikators der zweiten Zelle aufweist:
Erzeugen einer Identifikatorkandidatenliste, die nur die Identifikatoren enthält, die keiner Zelle in den ersten, zweiten und dritten Nachbarzelleninformationen zugewiesen sind;
Bestimmen eines Identifikators, welcher der zweiten Zelle zugewiesen ist, aus der Identifikatorkandidatenliste; und
Melden des ausgewählten Identifikators an die zweite Basisstation (12).

6. Computerprogrammprodukt, das Anweisungen aufweist, um zu bewirken, dass eine computerprogrammierbare Vorrichtung als die Identifikatorzuweisungsvorrichtung (13) nach Anspruch 3 konfiguriert wird.

## Revendications

1. Système de communication (10) comprenant :
une première station de base (11) qui forme une première cellule ;
une deuxième station de base (12) qui forme une deuxième cellule ;
une troisième station de base qui forme une troisième cellule ; et
un dispositif d'attribution d'identifiant (13) qui est configuré pour attribuer un identifiant afin d'identifier la deuxième cellule, dans lequel le dispositif d'attribution d'identifiant fait partie d'une fonction de réseau d'auto-organisation, SON, centralisée d'un système d'opérations, administration et maintenance, OAM, dans lequel :
la première cellule, qui n'est pas connectée à la fonction SON, est une cellule voisine de la deuxième cellule ;
la troisième cellule est une cellule voisine de la première cellule ;
la deuxième cellule et la troisième cellule sont connectées à un système de gestion d'élément, EMS, ayant la fonction SON ;
la première station de base (11) est configurée pour transmettre des premières informations de cellules voisines, contenant des informations d'identifiant de cellules voisines de la première cellule à la deuxième station de base (12) ;
la deuxième station de base (12) est configurée pour transmettre les premières informations de cellules voisines, reçues depuis la première station de base (11), et des deuxièmes informations de cellules voisines, contenant des informations d'identifiant de cellules voisines de la deuxième cellule, au dispositif d'attribution d'identifiant (13) ;
la troisième station de base est configurée pour transmettre des troisièmes informations de cellules voisines, contenant des informations d'identifiant de cellules voisines de la troisième cellule, au dispositif d'attribution d'identifiant (13) directement ou par le biais d'une autre station de base qui est connectée au dispositif d'attribution d'identifiant (13) ; et
l'attribution d'identifiant de l'identifiant de la deuxième cellule est basée sur les troisièmes informations de cellules voisines, les deuxièmes informations de cellules voisines, et les premières informations de cellules voisines ;
dans lequel le dispositif d'attribution d'identifiant (13) est configuré pour attribuer l'identifiant de la deuxième cellule par :
la création d'une liste de candidats d'identifiant contenant uniquement les identifiants qui ne sont pas alloués à une cellule dans les premières, deuxièmes, et troisièmes informations de cellules voisines ;
la détermination d'un identifiant à attribuer à la deuxième cellule à partir de la liste de candidats d'identifiant ; et
la notification de l'identifiant sélectionné à la deuxième station de base (12).

2. Système de communication (10) selon la revendication 1, comprenant en outre :
une quatrième station de base qui forme une quatrième cellule incluse dans une liste de cellules voisines de la deuxième cellule, dans lequel
lorsqu'un canal de communication n'est pas établi entre la deuxième station de base (12) et la quatrième station de base, le dispositif d'attribution d'identifiant (13) est configuré pour demander à la deuxième station de base (12) d'établir un canal de communication entre la deuxième station de base (12) et la quatrième station de base.

3. Dispositif d'attribution d'identifiant (13) dans un système de communication (10) comportant une première station de base (11) formant une première cellule, une deuxième station de base (12) formant une deuxième cellule, et une troisième station de base formant une troisième cellule, dans lequel le dispositif d'attribution d'identifiant fait partie d'une fonction de réseau d'auto-organisation, SON, centralisée d'un système d'opérations, administration et maintenance, OAM, et dans lequel la première cellule est une cellule voisine de la deuxième cellule et la troisième cellule est une cellule voisine de la première cellule et dans lequel la première cellule n'est pas connectée à la fonction SON et la deuxième cellule et la troisième cellule sont connectées à un système de gestion d'élément, EMS, ayant la fonction SON, le dispositif d'attribution d'identifiant (13) attribuant un identifiant de la deuxième cellule, comprenant :
un moyen de réception (16) afin de recevoir des premières informations de cellules voisines, contenant des informations d'identifiant de cellules voisines de la première cellule, et des deuxièmes informations de cellules voisines, contenant des informations d'identifiant de cellules voisines de la deuxième cellule, depuis la deuxième station de base (12), et afin de recevoir des troisièmes informations de cellules voisines, contenant des informations d'identifiant de cellules voisines de la troisième cellule, depuis la troisième station de base directement ou par le biais d'une autre station de base qui est connectée au dispositif d'attribution d'identifiant (13) ; et
un moyen d'attribution d'identifiant (17) afin d'attribuer l'identifiant de la deuxième cellule d'après les troisièmes informations de cellules voisines reçues par le moyen de réception (16), les deuxièmes informations de cellules voisines reçues par le moyen de réception (16), et les premières informations de cellules voisines reçues par le moyen de réception (16) ;
dans lequel le moyen d'attribution d'identifiant (17) est configuré pour attribuer l'identifiant de la deuxième cellule par :
la création d'une liste de candidats d'identifiant contenant uniquement les identifiants qui ne sont pas alloués à une cellule dans les premières, deuxièmes, et troisièmes informations de cellules voisines ;
la détermination d'un identifiant à attribuer à la deuxième cellule à partir de la liste de candidats d'identifiant ; et
la notification de l'identifiant sélectionné à la deuxième station de base (12).

4. Procédé d'attribution d'identifiant réalisé par un système de communication (10) comportant une première station de base (11) formant une première cellule, une deuxième station de base (12) formant une deuxième cellule, une troisième station de base formant une troisième cellule, et un dispositif d'attribution d'identifiant (13) qui attribue un identifiant de la deuxième cellule, dans lequel le dispositif d'attribution d'identifiant fait partie d'une fonction de réseau d'auto-organisation, SON, centralisée d'un système d'opérations, administration et maintenance, OAM, dans lequel la première cellule est une cellule voisine de la deuxième cellule et la troisième cellule est une cellule voisine de la première cellule, et dans lequel la première cellule n'est pas connectée à la fonction SON et la deuxième cellule et la troisième cellule sont connectées à un système de gestion d'élément, EMS, ayant la fonction SON, le procédé comprenant :
la transmission par la première station de base (11) de premières informations de cellules voisines, contenant des informations d'identifiant de cellules voisines de la première cellule, à la deuxième station de base (12) ;
la transmission par la deuxième station de base (12) des premières informations de cellules voisines, reçues par la deuxième station de base (12), et de deuxièmes informations de cellules voisines, contenant des informations d'identifiant de cellules voisines de la deuxième cellule, au dispositif d'attribution d'identifiant (13) ;
la transmission par la troisième station de base de troisièmes informations de cellules voisines, contenant des informations d'identifiant de cellules voisines de la troisième cellule, au dispositif d'attribution d'identifiant (13) directement ou par le biais d'une autre station de base qui est connectée au dispositif d'attribution d'identifiant (13) ; et
l'attribution par le dispositif d'attribution d'identifiant (13) de l'identifiant de la deuxième cellule d'après les troisièmes informations de cellules voisines reçues par le dispositif d'attribution d'identifiant (13), les deuxièmes informations de cellules voisines reçues par le dispositif d'attribution d'identifiant (13), et les premières informations de cellules voisines reçues par le dispositif d'attribution d'identifiant (13) ;
l'attribution de l'identifiant de la deuxième cellule comprenant :
la création d'une liste de candidats d'identifiant contenant uniquement les identifiants qui ne sont pas alloués à une cellule dans les premières, deuxièmes, et troisièmes informations de cellules voisines ;
la détermination d'un identifiant à attribuer à la deuxième cellule à partir de la liste de candidats d'identifiant ; et
la notification de l'identifiant sélectionné à la deuxième station de base (12).

5. Procédé réalisé par un dispositif d'attribution d'identifiant (13) dans un système de communication (10) comportant une première station de base (11) formant une première cellule, une deuxième station de base (12) formant une deuxième cellule, et une troisième station de base formant une troisième cellule, dans lequel le dispositif d'attribution d'identifiant fait partie d'une fonction de réseau d'auto-organisation, SON, centralisée d'un système d'opérations, administration et maintenance, OAM, et dans lequel la première cellule n'est pas connectée à la fonction SON, et la deuxième cellule et la troisième cellule sont connectées à un système de gestion d'élément, EMS, ayant la fonction SON, le dispositif d'attribution d'identifiant (13) attribuant un identifiant de la deuxième cellule, le procédé comprenant :
la réception de premières informations de cellules voisines, contenant des informations d'identifiant de cellules voisines de la première cellule, et des deuxièmes informations de cellules voisines, contenant des informations d'identifiant de cellules voisines de la deuxième cellule, depuis la deuxième station de base (12) ;
la réception de troisièmes informations de cellules voisines, contenant des informations d'identifiant de cellules voisines de la troisième cellule, depuis la troisième station de base directement ou par le biais d'une autre station de base qui est connectée au dispositif d'attribution d'identifiant (13) ; et
l'attribution de l'identifiant de la deuxième cellule d'après les troisièmes informations de cellules voisines reçues, les deuxièmes informations de cellules voisines reçues, et les premières informations de cellules voisines reçues ;
l'attribution de l'identifiant de la deuxième cellule comprenant :
la création d'une liste de candidats d'identifiant contenant uniquement les identifiants qui ne sont pas alloués à une cellule dans les premières, deuxièmes, et troisièmes informations de cellules voisines ;
la détermination d'un identifiant à attribuer à la deuxième cellule à partir de la liste de candidats d'identifiant ; et
la notification de l'identifiant sélectionné à la deuxième station de base (12).

6. Produit-programme d'ordinateur comprenant des instructions afin d'amener un dispositif programmable par ordinateur à être configuré comme le dispositif d'attribution d'identifiant (13) selon la revendication 3.
